# EUROPÄISCHE PATENTANMELDUNG

(11) **EP 0 791 755 A2**
(43) Veröffentlichungstag der Anmeldung: **27.08.1997**
(21) Anmeldenummer: 97101427.9
(22) Anmeldetag: 30.01.1997
(51) Int. Cl.: F16B 12/20

(54) **Verbindungsbeschlag zum lösbaren Verbinden zweier Möbelteile**

(30) Priorität: 22.02.1996 AT 325/96
(71) Anmelder: Julius Blum Gesellschaft m.b.H., 6973 Höchst (AT)
(72) Erfinder: Röck, Erich, 6973 Höchst (AT)
(74) Vertreter: Torggler, Paul Norbert

(57) **Zusammenfassung**

Ein Verbindungsbeschlag zum lösbaren Verbinden zweier plattenförmiger Möbelteile, mit einem an einem der Möbelteile zu befestigenden Zapfen (1) und einem in den anderen Möbelteil einsetzbaren zylindrischen Gehäuse (3), in dem ein von einer Feder (36) beaufschlagter Riegelteil (9) angeordnet ist, der den in das Gehäuse (3) ragenden Zapfen (1) arretiert. Der Zapfen (1) ragt durch eine Öffnung (7) im Mantel des Gehäuses (3). Im Gehäuse (3) ist ein Sperrteil (20) angeordnet, der den Riegelteil (9) entgegen der Federeinwirkung in der Losestellung arretiert. Ein Auslösehebel (42) ist im Gehäuse (3) sowohl linear beweglich als auch drehbar gelagert und durch den Zapfen (1) aus der Sperrstellung bringbar. Der Auslösehebel (42) wird von einem Federelement beaufschlagt, das den Auslösehebel (42) selbsttätig in die Ausgangsstellung drückt und ist an einem im Gehäuse (3) drehbar gelagerten Führungshebel (39) ebenfalls drehbar gelagert.

## Beschreibung

Die Erfindung bezieht sich auf einen Verbindungsbeschlag zum lösbaren Verbinden zweier Möbelteile, insbesondere zum Verbinden zweier plattenförmiger Möbelteile, mit einem an einem der Möbelteile zu befestigenden Zapfen und einem in den anderen Möbelteil einsetzbaren zumindestens bereichsweise zylindrischen Gehäuse, in dem ein von einer Feder beaufschlagter Riegelteil angeordnet ist, der den in das Gehäuse ragenden Zapfen arretiert, wobei der Zapfen durch eine Öffnung im Mantel des Gehäuses ragt und im Gehäuse ein Sperrteil angeordnet ist, der den Riegelteil entgegen der Federeinwirkung in der Losestellung arretiert, und der durch den Zapfen aus der Sperrstellung bewegt wird.

Die EU-B1 0 058 220 zeigt einen Verbindungsbeschlag zum lösbaren Verbinden zweier im rechten Winkel zueinander stehender plattenförmiger Möbelteile, wobei in jeden Möbelteil ein Gehäuse einsetzbar ist. In einem Gehäuse ist ein von einer Feder beaufschlagter Hebel gelagert, der einen Haken aufweist. In Montagelage ragt dieser Hebel stirnseitig in das andere Gehäuse und rastet dort hinter einem Rastvorsprung ein, wodurch die beiden Möbelteile miteinander verbunden werden. Durch Verdrehen eines Gewindebolzens, der im gleichen Gehäuse gelagert ist, kann der Haken aus seiner Riegelstellung gebracht werden.

Die DE 31 27 795 A1 beschreibt einen Verbindungsbeschlag, bei dem ein in einem Möbelteil verankerter Zapfen mit seinem Kopf radial in einem im anderen Möbelteil gelagerten zylindrischen Spannteil ragt. Durch Verdrehen des Spannteiles wird der Zapfen in den Möbelteil hineingezogen und es kommt zu einer festen Verbindung der beiden Möbelteile.

Aufgabe der Erfindung ist es, einen Verbindungsbeschlag der eingangs erwähnten Art dahingehend zu verbessern, daß eine Spannung zwischen den beiden Möbelteilen erreicht wird, ohne daß es notwendig ist, beim Kuppen der Verbinderteile ein Werkzeug zu verwenden und wobei der Zapfen nach dem Lösen wieder vom zylindrischen Spannteil arretiert wird, ohne daß es notwendig ist, den Spannteil oder sonst einen Teil im zylindrischen Gehäuse zu verstellen. Weiters soll es möglich sein, die Verriegelung des Zapfens zu lösen und den Zapfen im Gehäuse zu belassen.

Die erfindungsgemäße Aufgabe wird dadurch erreicht, daß der Sperrteil beim Einführen des Zapfens in das Gehäuse über einen Auslösehebel aus der Sperrstellung bewegt wird, wobei der Auslösehebel, der von einem Federelement beaufschlagt wird, das den Auslösehebel selbsttätig in die Ausgangsstellung drückt, an einem im Gehäuse drehbar gelagerten Führungshebel drehbar gelagert ist.

Der erfindungsgemäße Möbelverbinder hat gegenüber dem Möbelverbinder nach der DE 31 27 795 A1 den Vorteil, daß er sofort nach dem Entriegeln wieder funktionsfähig ist. Beim Möbelverbinder nach dem Stand der Technik muß der Betätigungshebel nach dem Entriegeln erst in eine Bereitschaftsstellung geschwenkt werden. Ansonsten würde ein nochmaliges Einführen des bolzenförmigen Beschlagteiles keine Verriegelung bewirken.

Vorteilhaft ist vorgesehen, daß sich an der Innenseite einer Stirnwand des Gehäuses eine Führungsbahn befindet, in der ein Führungsbolzen od. dgl. des Auslösehebels geführt ist.

Nachfolgend wird ein Ausführungsbeispiel der Erfindung anhand der Figuren der beiliegenden Zeichnungen beschrieben.

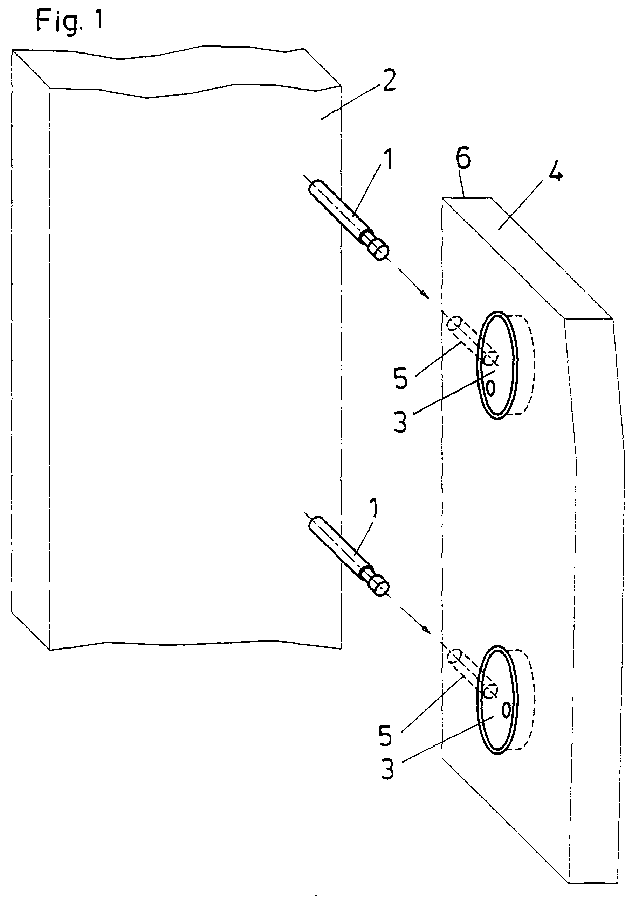

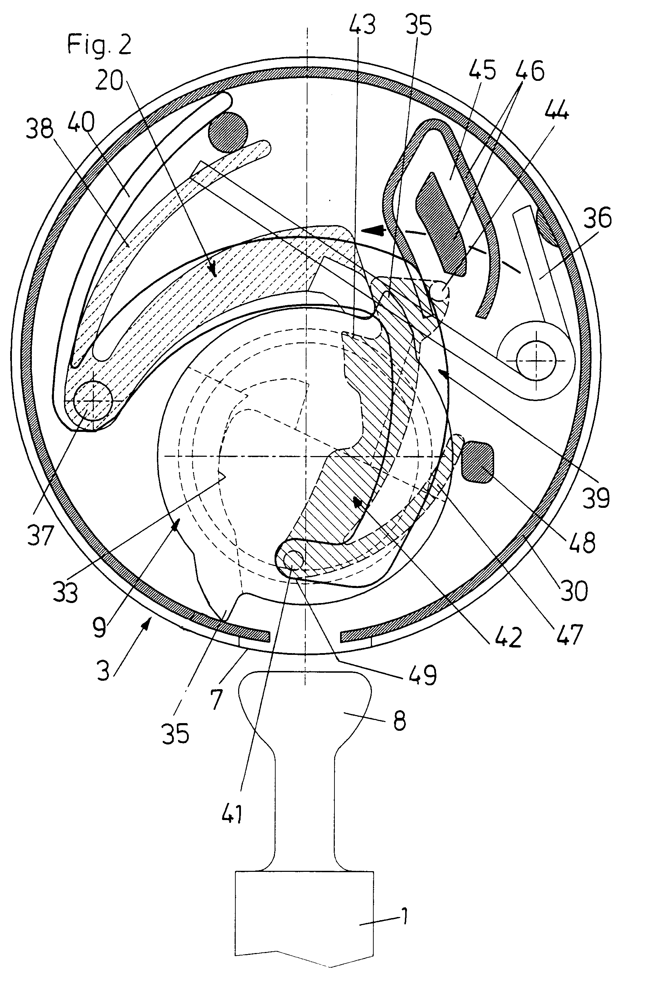

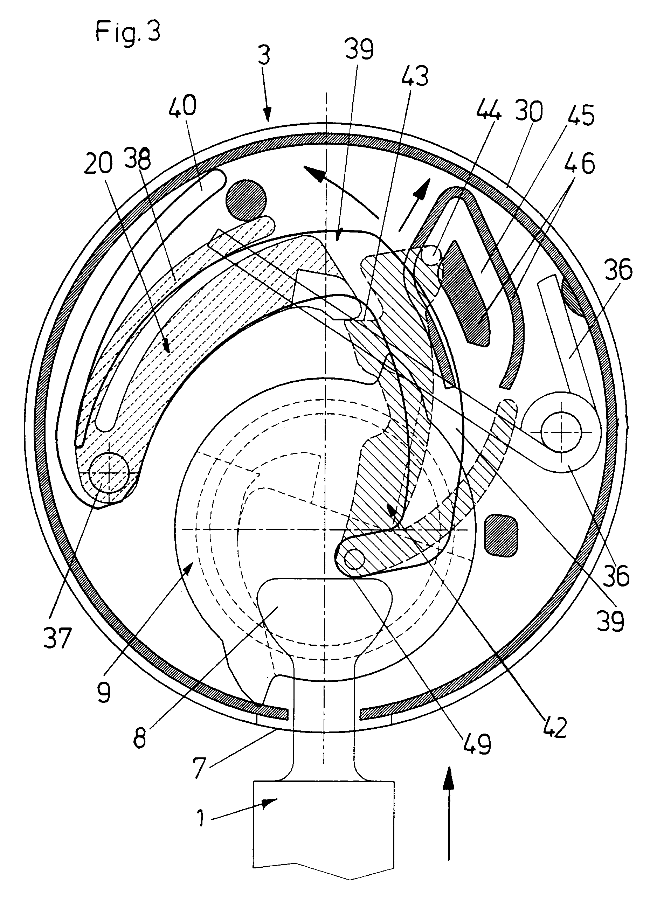

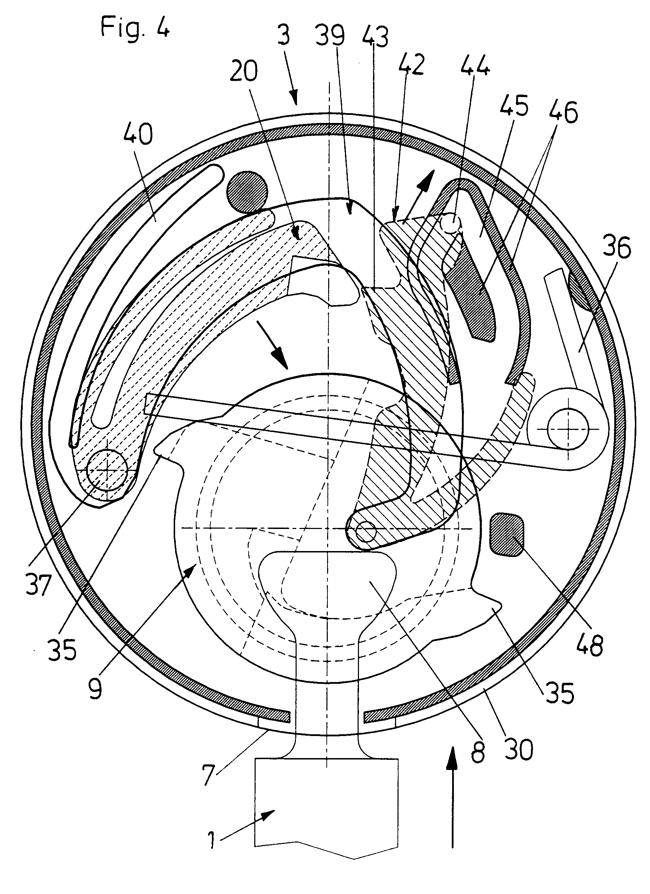

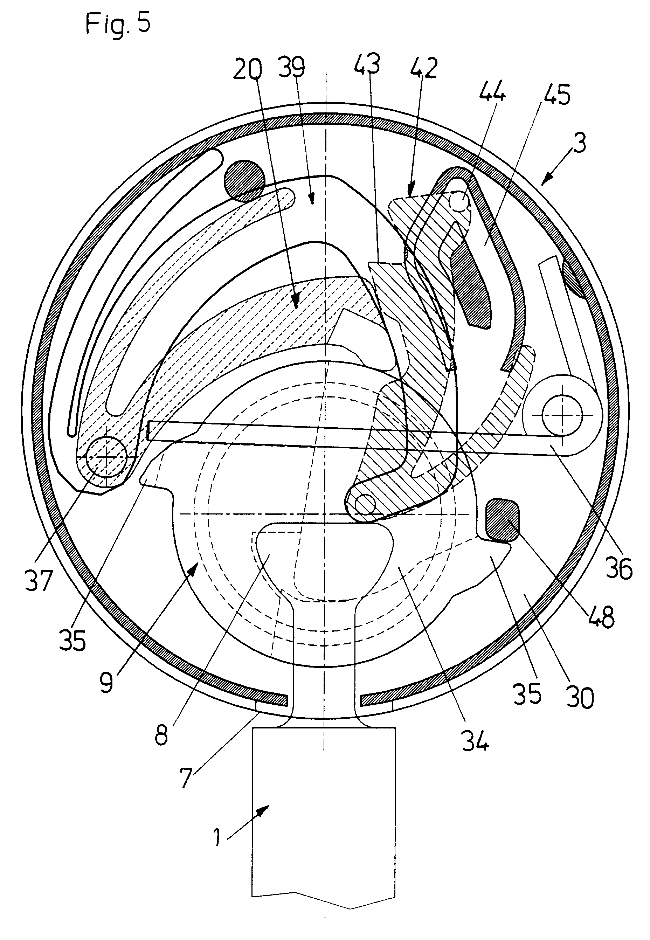

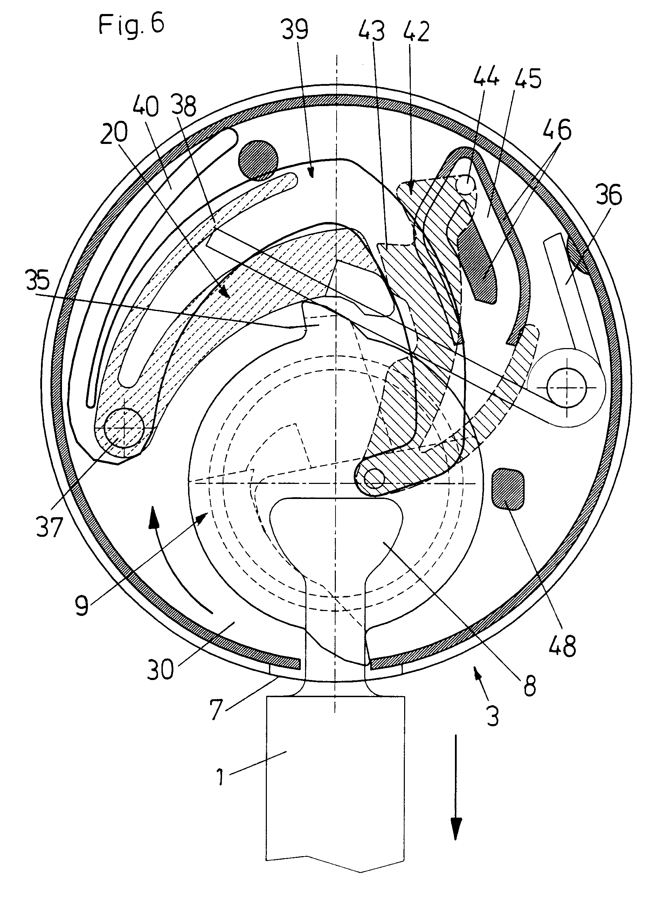

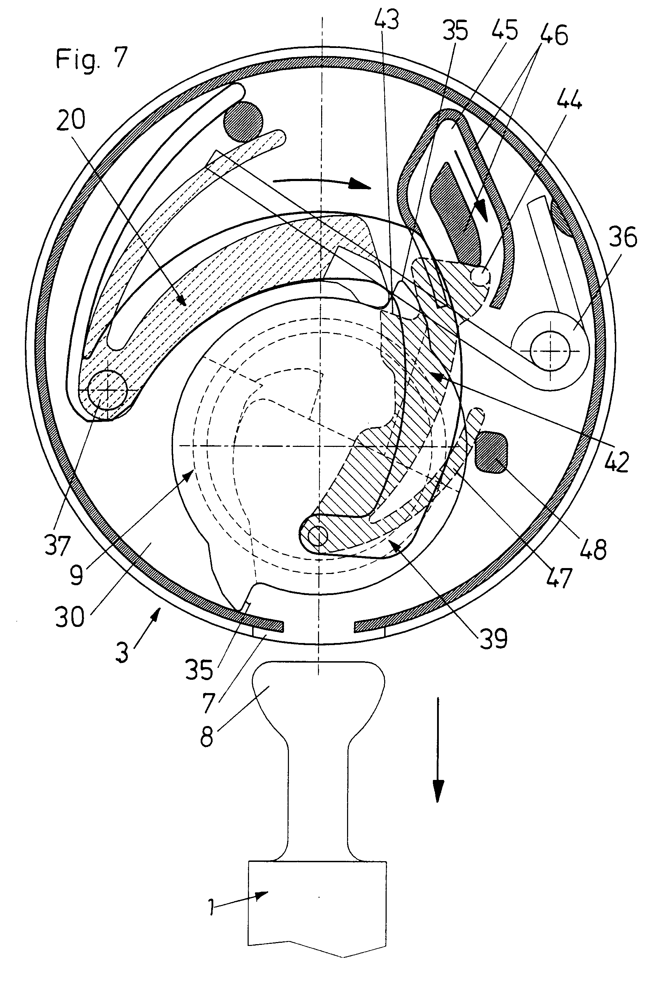

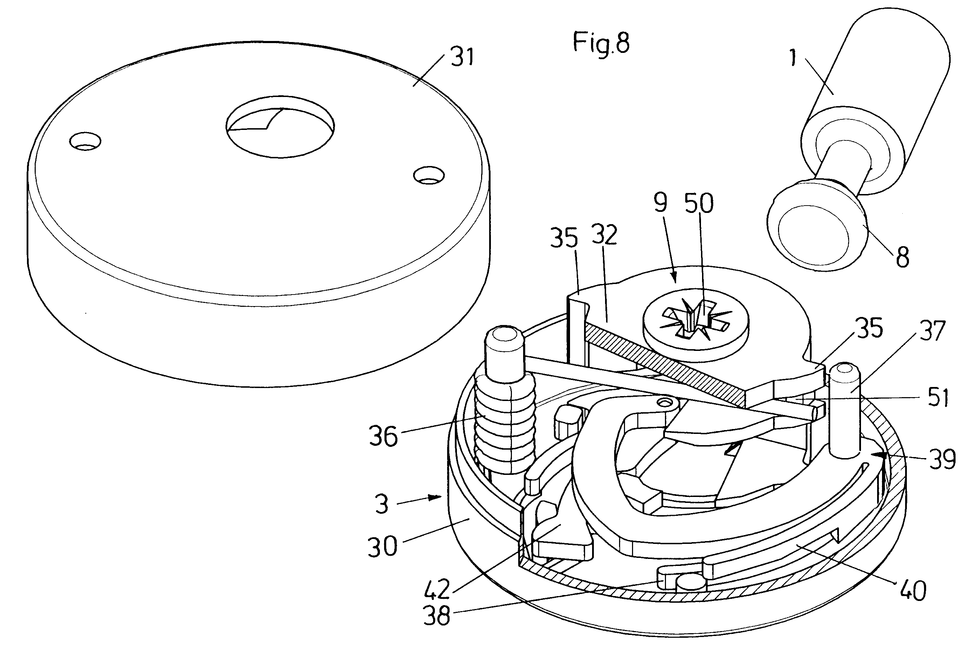

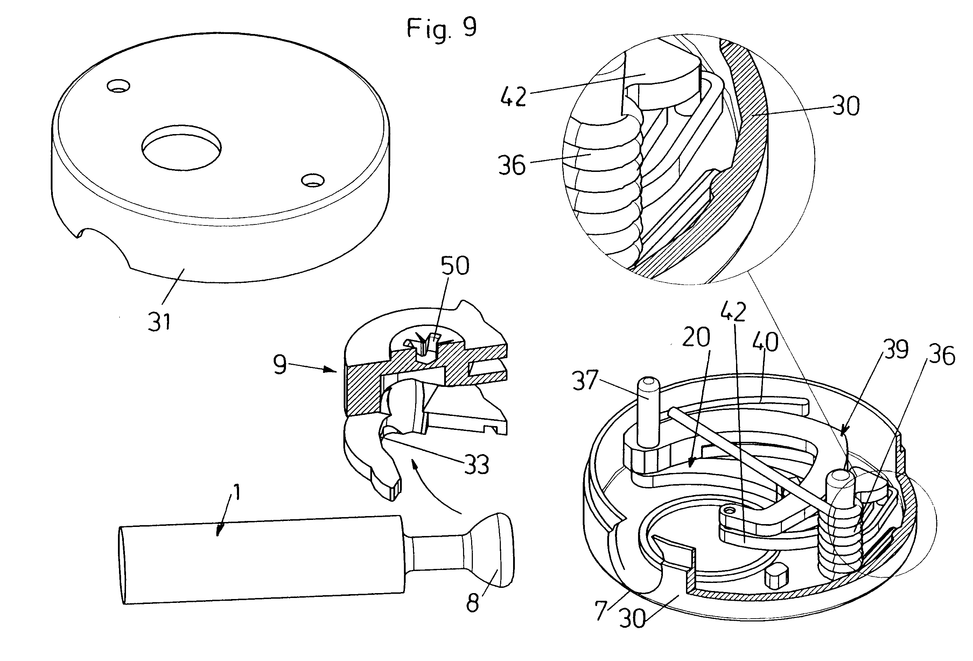

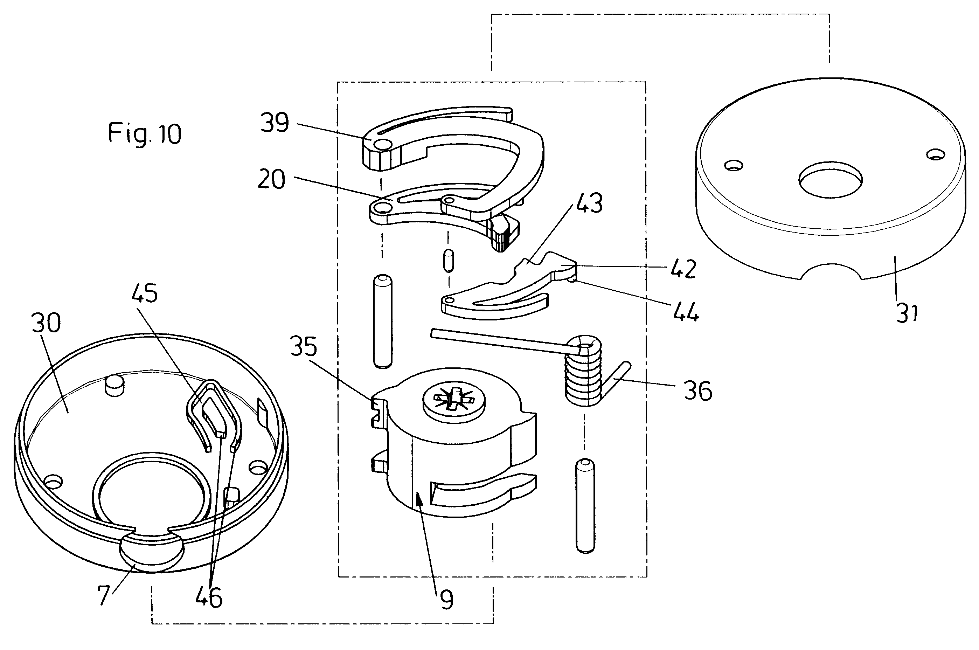

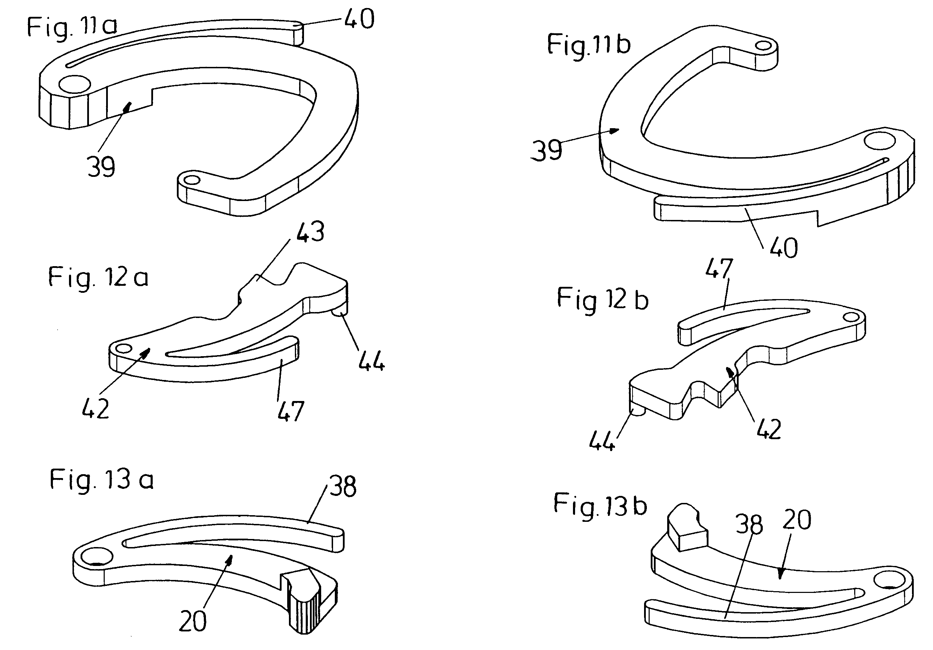

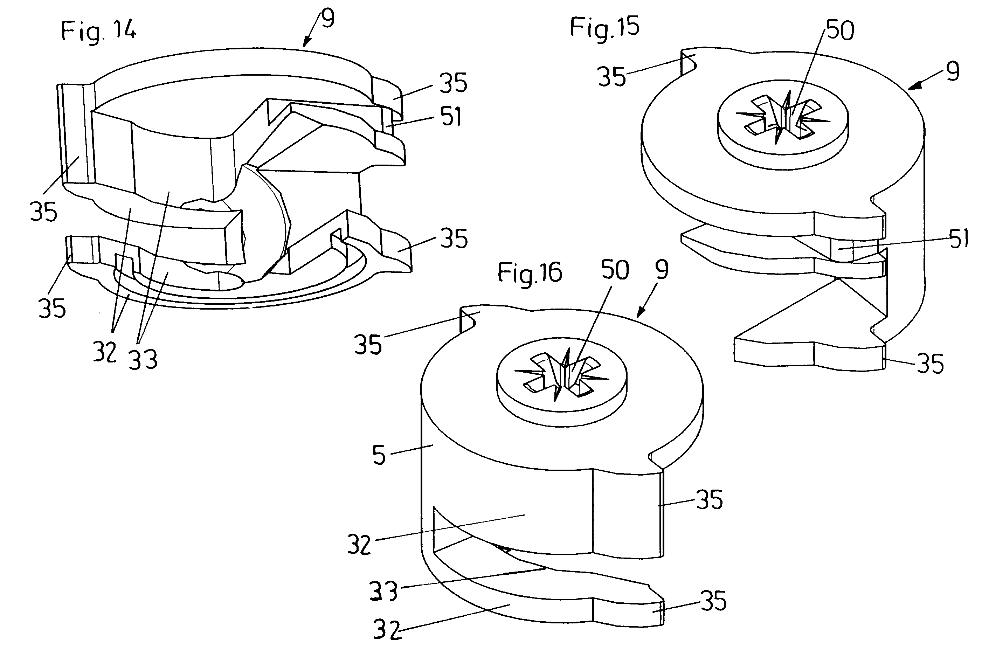

Die Fig. 1 zeigt schematisch zwei Möbelteile, die mittels des erfindungsgemäßen Verbindungsbeschlages zu verbinden sind; die Fig. 2 zeigt einen Querschnitt durch ein Gehäuse in der Stellung bevor der Zapfen in das Gehäuse eingeschoben wird; die Fig. 3 zeigt einen Querschnitt durch das Gehäuse, wobei der Zapfen mit seinem Kopf in das Gehäuse eingeschoben ist, aber noch nicht vom Riegelteil erfaßt wird; die Fig. 4 zeigt einen Querschnitt durch das Gehäuse, wobei der Zapfen vom Riegelteil erfaßt wird; die Fig. 5 zeigt einen Querschnitt durch das Gehäuse, wobei der Zapfen in der voll verriegelten Stellung gezeigt ist; die Fig. 6 zeigt einen Querschnitt durch das Gehäuse während des Lösens des Zapfens; die Fig. 7 zeigt einen Querschnitt durch das Gehäuse bei gelöstem Zapfen; die Fig. 8 zeigt schaubildlich und teilweise im Schnitt das geöffnete Gehäuse; die Fig. 9 zeigt eine weitere schaubildliche Ansicht des Gehäuses, wobei der Riegelteil getrennt gezeichnet ist; die Fig. 10 zeigt schaubildlich und auseinandergezogen die einzelnen Teile des erfindungsgemäßen Verbindungsbeschlages; die Fig. 11 zeigt ein Schaubild des Führungshebels; die Fig. 12 zeigt ein Schaubild des Auslösehebels; die Fig. 13 zeigt ein Schaubild des Sperrteiles und die Fig. 14 bis 16 zeigen Schaubilder des Riegelteiles.

Wie aus der Fig. 1 ersichtlich, sind die Zapfen 1 flachseitig in eine Möbelwand 2 eingesetzt. Auf die Art der Befestigung der Zapfen 1 in der Möbelwand 2 soll in diesem Rahmen nicht eingegangen werden, sie kann auf jede herkömmliche Art erfolgen. Beispielsweise kann der Zapfen 1 in einen in die Möbelwand 2 eingesetzten Dübel eingeschraubt sein oder mit diesem einen Beschlagteil bilden.

Das zum Zapfen 1 korrespondierende zylindrische Gehäuse 3 ist ebenso flachseitig in eine Möbelwand 4 eingesetzt. In der Möbelwand 4 ist bei jedem Gehäuse 3 eine Bohrung 5 vorgesehen, die zur Stirnseite 6 der Möbelwand 4 führt. Der Zapfen 1 ist von der Stirnseite 6 her in die Möbelwand 4 einsetzbar und ragt seitlich durch eine Öffnung 7 in das Gehäuse 3. Die Öffnung 7 befindet sich im Mantel des Gehäuses 3.

Der Zapfen 1 ist an seinem freien Ende mit einem Kopf 8 versehen, an dem ein in Montagelage im Gehäuse 3 gelagerter Riegelteil 9 angreift.

Das Gehäuse 3 ist zweiteilig mit einem Unterteil 30 und einem Deckel 31 ausgeführt. Der im Gehäuse 3 gelagerte Riegelteil 9 ist ebenfalls im wesentlichen zylindrisch ausgeführt und weist einen oberen und einen unteren Spannbereich 32 auf, an denen die Verriegelungskurve 33 ausgebildet ist. Im Verriegelungszustand befindet sich der Kopf 8 des Zapfens 1 in einer Aussparung 34 des Riegelteils 9 und wird von den Spannbereichen 32 erfaßt.

An seinem Mantel ist der Riegelteil 9 mit zwei Nasen 35 versehen, die die Drehbewegung des Riegelteiles 9 begrenzen.

Der Riegelteil 9 wird von einer Schenkelfeder 36 beaufschlagt, die den Riegelteil 9 in die Verriegelungsstellung drückt. Ein Schenkel der Schenkelfeder 36 stützt sich innen an der Gehäusewand ab, während der zweite Schenkel in den Riegelteil 9 eingreift und an einer Wand 51 des Riegelteiles 9 anliegt.

In der Entriegelungsstellung stützt sich eine Nase 35 des Riegelteiles 9 am Sperrteil 20 ab. Der Sperrteil 20 ist als Hebel ausgebildet, der um eine Achse 37 drehbar ist. Am Sperrteil 20 ist ein Federelement 38 angeformt, welches den Sperrteil 20 in die Arretierstellung drückt.

Im Gehäuse 3 lagert weiters ein Führungshebel 39, der ebenfalls an der Achse 37 angelenkt ist. Auch am Führungshebel 39 ist ein Federelement 40 angeformt, das den Führungshebel 39 im Uhrzeigersinn beaufschlagt.

Am der Achse 37 gegenüberliegenden Ende ist der Führungshebel 39 über eine Achse 41 mit einem Auslösehebel 42 verbunden. Der Auslösehebel 42 weist an seinem freien Ende eine Nase 43 auf und einen Zapfen 44. Mittels des Zapfens 44 ist der Auslösehebel 42 in einer Führungsbahn 45 geführt, die von zwei von der Gehäusewand abstehenden Stegen 46 gebildet wird. Auch am Auslösehebel 42 ist ein Federelement 47 angeformt. Das Federelement 47 stützt sich an einem Zapfen 48 ab, der von der Stirnfläche des Gehäuses 3 absteht.

Bevor der Zapfen 1 in das Gehäuse 3 eingeschoben wird, befinden sich die Teile des Verbindungsbeschlages in der in der Fig. 2 gezeigten Stellung. Wenn der Zapfen 1 in das Gehäuse 3 eindringt, stößt er mit seinem Kopf 8 an den Enden 49 des Führungshebels 39 und des Auslösehebels 42 an. Dabei bewegen sich der Führungshebel 39 und der Auslösehebel 42 in der Richtung der Pfeile der Fig. 3.

Wenn die Nase 43 des Auslösehebels 42 am Sperrteil 20 anstößt, wird dieser im Gegenuhrzeigersinn um die Achse 37 gedreht. Der Sperrteil 20 weist einen seitlich vorspringende Sperrnase auf, an der die Nase 35 des Riegelteiles 9 anliegt. Wird der Sperrteil 20 durch den Auslösehebel 42 von der Nase 35 des Riegelteiles 9 abgehoben, wird der Riegelteil 9 von der Schenkelfeder 36 im Gegenuhrzeigersinn gedreht und er erfaßt mit den Haltekurven 33 der Spannbereiche 42 den Kopf 8 des Zapfens 1, wodurch der Zapfen 1 im Gehäuse 3 arretiert wird. Diese Situation ist in der Fig. 5 gezeigt.

An der Stirnwand des Gehäuses 3 ist ein Vorsprung 48 ausgebildet, an dem die zweite Nase 35 des Riegelteiles 9 bei verriegeltem Zapfen anliegt, wodurch der Drehweg des Riegelteiles 9 begrenzt ist. Der Zapfen 44 des Auslösehebels 42 befindet sich im Scheitelpunkt der Führungsbahn 45.

Wird der Riegelteil 9 mittels eines Kreuzschraubenziehers, der beim Sitz 50 einrastet, gelöst und im Uhrzeigersinn gedreht, drückt das Federelement 47 den Auslösehebel 42 in der Richtung zur Öffnung 7 des Gehäuses 3 und das Federelement 38 schwenkt den Sperrteil 20 im Uhrzeigersinn, sodaß er wieder hinter der Nase 35 des Riegelteiles 9 einrastet. Diese Situation ist in der Fig. 7 gezeigt. Das Federelement 47 drückt den Auslösehebel 42 so weit im Gegenuhrzeigersinn, bis sich die Nase 43 vor dem freien Ende des Sperrteiles 20 befindet. Der Verbindungsbeschlag befindet sich somit in der Ausgangsposition und kann durch das Einfahren eines Zapfens 1 aktiviert werden.

Es ist von besonderer Bedeutung, daß der Sperrteil 20, der Führungshebel 39 und der Auslösehebel 42 selbsttätig in die Ausgangsposition zurückkehren. Der Verbindungsbeschlag ist daher immer funktionsfähig und es kann nicht vorkommen, daß es beim Einführen des Zapfens 1 durch eine falsche Stellung dieser Teile zu einer Beschädigung des Verbindungsbeschlages kommt.

## Patentansprüche

1. Verbindungsbeschlag zum lösbaren Verbinden zweier Möbelteile, insbesondere zum Verbinden zweier plattenförmiger Möbelteile, mit einem an einem der Möbelteile zu befestigenden Zapfen und einem in den anderen Möbelteil einsetzbaren zumindestens bereichsweise zylindrischen Gehäuse, in dem ein von einer Feder beaufschlagter Riegelteil angeordnet ist, der den in das Gehäuse ragenden Zapfen arretiert, wobei der Zapfen durch eine Öffnung im Mantel des Gehäuses ragt und im Gehäuse ein Sperrteil angeordnet ist, der den Riegelteil entgegen der Federeinwirkung in der Losestellung arretiert, und der durch den Zapfen aus der Sperrstellung bewegt wird, dadurch gekennzeichnet, daß der Sperrteil (20) beim Einführen des Zapfens (1) in das Gehäuse (3) über einen Auslösehebel (42) aus der Sperrstellung bewegt wird, wobei der Auslösehebel (42), der von einem Federelement beaufschlagt wird, das den Auslösehebel (42) selbsttätig in die Ausgangsstellung drückt, an einem im Gehäuse (3) drehbar gelagerten Führungshebel (39) drehbar gelagert ist.

2. Verbindungsbeschlag nach Anspruch 1, dadurch gekennzeichnet, daß sich an der Innenseite einer Stirnwand des Gehäuses (3) eine Führungsbahn (45) befindet, in der ein Führungsbolzen (44) od. dgl. des Auslösehebels (42) geführt ist.

3. Verbindungsbeschlag nach Anspruch 1, dadurch gekennzeichnet, daß der Führungshebel (39) und der Sperrteil (20) auf einer gemeinsamen Achse (37) gelagert sind.

4. Verbindungsbeschlag nach Anspruch 1, dadurch gekennzeichnet, daß der Führungshebel (39) bügelförmig ausgebildet ist.

5. Verbindungsbeschlag nach einem der Ansprüche 1 bis 4, dadurch gekennzeichnet, daß der im wesentlichen zylindrisch ausgebildete Riegelteil (9) zwei radial vorspringende Nasen (35) aufweist, von denen eine bei gelöstem Verbindungsbeschlag am Sperrteil (20) anliegt und die andere in der Arretierstellung des Zapfens (1) an einem Anschlag (48) des Gehäuses (3).

6. Verbindungsbeschlag nach einem der Ansprüche 1 bis 5, dadurch gekennzeichnet, daß der Riegelteil (9), der Sperrteil (20), der Führungshebel (39) und der Auslösehebel (42) jeweils von einem gesonderten Federelement beaufschlagt werden.

7. Verbindungsbeschlag nach Anspruch 2, dadurch gekennzeichnet, daß die Führungsbahn (45) von von der Gehäusewand vorspringenden Stegen (46) gebildet wird.
